# EUROPEAN PATENT APPLICATION

(11) **EP 2 757 389 A2**
(43) Date of publication of application: **23.07.2014**
(21) Application number: 14151573.4
(22) Date of filing: 17.01.2014
(51) Int. Cl.: G01T 1/20

(54) **High resolution x-ray imaging with thin, flexible digital sensors**

(30) Priority: 17.01.2013 US 201313743525
(71) Applicant: Palo Alto Research Center Incorporated, Palo Alto, California 94304 (US)
(72) Inventor: Apte, Raj B, Palo Alto, CA California 94306 (US)
(74) Representative: Lord, Michael

(57) **Abstract**

An x-ray sensor (14) has a first x-ray transducer (22) layer on a first side of the substrate (20), and a second x-ray transducer (24) layer on a second side of the substrate (20) opposite the first side of the substrate, and a sensor array of pixels between the first x-ray transducer layer and at least a portion of the substrate, the sensor array connected to the first and second x-ray transducer layers.

## Description

### BACKGROUND

Film-based x-ray imaging is usually performed by sandwiching a high-speed photographic film between two sheets of phosphor. The two phosphors are usually similar in composition to each other but differ in thickness or density, and the thicknesses are chosen to provide both high imaging speed, or sensitivity, and improved resolution, or modulation transfer function (MTF). However, indirect digital x-ray imaging uses a single phosphor screen on top of a digital sensor, often made from amorphous silicon on a glass substrate. When incident x-rays strike the phosphor, it emits green (or other visible) light dctectable by a PIN diode array, which converts it to charge. A charge sensitive readout system employing an active matrix of transistors then detects the charge and produces an output signal.

The digital sensors typically reside on thick substrates of more than 200 micrometers, which results in the use of a micro-columnar Cesium Iodide (CsI) phosphor on one side of the sensor. A second phosphor on the obverse of the sensor is not usually employed because light generated in it would spread as it traverses the thick substrate. For typical thick substrates of 200 - 1,000um, such spreading would reduce in a blurry image with poor MTF. Single CsI screens produce good quality transduction, but are expensive, toxic and hygroscopic. The hygroscopic nature of the material causes much of the expense. A complicated process seals the CsI screen against moisture, and in rugged environment conditions these screens can fail if moisture penetrates the seals.

Recently, flexible substrates have been used for digital x-ray sensors which are substantially more robust than glass substrates against cracking or other mechanical damage. This is an important advantage in hospitals (where x-ray sensors may be roughly used in emergent care), in non-destructive testing (NDT, where sensors may be employed in the field), and in counter-improvised-explosive-device (c-IED) detection, which is performed on battlefields or other hostile or insecure locations.

Flexible substrates so employed may be mounted on carriers during fabrication, so that the superior thermal and mechanical properties of the carrier will allow higher temperature processing during fabrication, and the sensor may be un-mounted (or delaminated) after processing is complete. Such flexible substrates may be substantially thinner, from 25um - 200um.

A typical 4" CsI screen costs approximately 60 times the cost of a GdOS screen. The unit cost of the screen is a significant part of the overall costs of a digital radiography system, around 10%. The ability to use the less expensive GdOS screens in a manner that allows for better spatial resolution than the one-sided CsI screens.

### BRIEF DESCRIPTION OF THE DRAWINGS

Figure 1 shows an embodiment of an x-ray system.

Figure 2 shows an embodiment of an x-ray sensor having x-ray transducers on either side of a sensor substrate.

Figure 3 shows an embodiment of an x-ray sensor having phosphors as transducers.

Figure 4 shows an embodiment of an x-ray sensor having photoconductors as transducers.

### DETAILED DESCRIPTION OF THE EMBODIMENTS

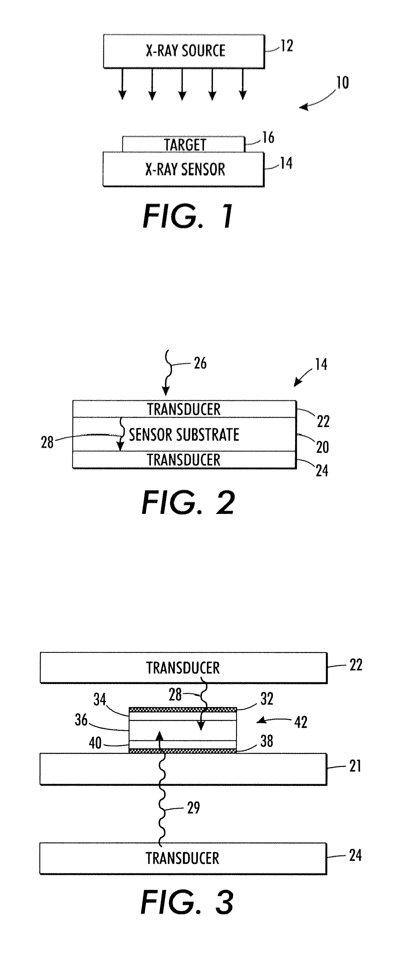

Figure 1 shows an embodiment of an x-ray system. As will be discussed in more detail later, the sensor 14 in this system 10 has a substrate having x-ray transducers on each side of a substrate. A transducer converts one form of energy to another. In this embodiment, the transducers convert x-rays into either light or voltage, depending upon the implementation of the sensors. X-rays from the x-ray source 12 only strike on one side of the substrate of the sensor 14, but some x-rays will pass through the substrate to reach the transducer on the other side. This approach has the advantage of phosphors or photoconductors on either side of the substrate, similar to film, but also with the advantages of a digital radiography system.

Figure 2 shows an embodiment of the x-ray sensor 14. The sensor has transducer layers on either side of the sensor substrate 20. The first transducer 22 resides on one side of the substrate 20 and the second transducer layer 24 resides on the side of the substrate opposite the side of the first transducer. The x-ray reactive surface of the transducer layers will face the incoming radiation. In some instances, the transducer on the side of the substrate facing the x-ray source may be referred to as the top transducer, and the side facing the x-ray source may be referred to the top in other instances as well.

It must be noted that the transducers may be referred to as transducer layers. The material of the transducer may take the form of a coating on a thin film that may be continuously coated across the film or as laminated or pressed sheets. Alternatively, the reactive material may be formed into regions such as an array with each region corresponding to one of the pixels on the sensor array. Generally, the sensor array will consist of an array of sensor elements, such as photodiodes, voltage sensors, etc. Because the sensors are laid out in arrays corresponding to imaging arrays, the individual elements may be referred to as pixels and the sensor may be referred to as being pixelated.

The incident x-ray radiation may strike the first transducer 22 and cause the transducer to react such as shown by x-ray 26. Generally, the transducer will convert a fraction of the x-ray energy to another form of energy, such as visible light which will be detected and absorbed by the sensor 20. The x-ray radiation such as 28 may also pass through the first transducer without causing it to interact, instead interacting in the second transducer 24 energy from such interaction will then be detected and absorbed by the sensor 20. This increases the overall sensitivity of the sensor, because the sensor detects x-rays that the sensor would otherwise have missed. This increases the spatial resolution of the sensor, or increases the brightness, either of which increases the clarity of the image produced. This in turn allows for the use of the less expensive GDOS screens.

Figure 3 shows one example of a transducer that captures the x-rays using x-ray reactive phosphors. When the x-rays strike the phosphors, the phosphors generate light, typically green light, and the light is detected by a photosensitive element.

In the embodiment of Figure 3, the photosensitive element is a PIN diode 42, having a p-type region 34 separated from an n-type region 40 by an intrinsic semiconductor region (i-region) 36. Partially or completely transparent electrodes 32 are electrically connected to the p-type region, and partially or completely transparent electrode 38 is connected to the n-type region. The electrodes 32 are shown as being on either side other p-type region and the electrode 38 is shown as a single electrode. All variations and modifications of electrodes are within the scope of the embodiments, such as single electrodes, double electrodes, different positions etc.

Incident x-rays captured by the first transducer 22, shown in dashed lines, cause the transducer, in this case a phosphor, to emit green light 28 that is detected by the PIN diode 42, converting the light to charge. X-rays that are captured by the transducer 24 cause light such as light ray 29 to be emitted and then detected by the PIN diode 42. Light ray 29 passes through the thin (<200um) and optically transparent substrate 21.

Generally, electrodes 32 and 38 are biased and connected to an active matrix system which is then capable of detecting and digitizing the image data to acquire a digital radiograph. All variations of this system are within the scope of the embodiments.

A structural consideration in such a sensor lies in the x-ray sensor pixel allowing illumination from both top, or x-ray source side, and bottom, or substrate-facing side. In present digital x-ray sensors, the source-drain (S/D) regions and n-contact 38 are opaque and prevent bottom illumination. However, many variations of a transparent bottom electrode are possible, including heavily doped n⁺ materials, micro-crystalline n⁺, transparent mushroom metal such as indium-tin-oxide (ITO), and mushroom metal fanout.

For example, the n⁺ region can be doped at a high enough concentration to replace the bottom metal contact so that a small S/D pad such as 38 in Figure 3, becomes a sufficient contact to the switch transistor. Micro-crystalline n⁺ has superior conductivity, so it may provide an option if the sheet resistance of the n⁺ amorphous silicon (a-Si) remains too high, depending upon the specifics of pixel pitch and process details. Transparent n-contact metal 38 can also be used. Similarly, the n-contact metal 38 can be fanned out to make up for n⁺ a-Si resistivity. Any of these embodiments allow a significant amount of light from the bottom of the substrate to reach the capture layer. At x-ray tube voltages of 150 and 300 VKVp, which are of interest for NDT and c-IED, the absorption coefficient of GdOS is higher than CsI, In the below table, the effect of the higher absorption coefficient of GdOS on x-ray stopping power of screens.

| | abs (cm²/g), 200 KV | density (g/cm³) | t (cm) | total abs | Sheet density (mg/cm²) |
|---|---|---|---|---|---|
| GdOS | 0.481 | 7.44 | 0.030 | 10.18% | 223.2 |
| CsI | 0.381 | 4.51 | 0.070 | 11.33 | 315.7 |

Because of the higher density and absorption coefficient, only 300 micrometers of GdOS will stop as many x-rays as 700 micrometers of CsI. Given that the GdOS can be paired as a 120 micrometer front screen and a 180 micrometer back screen, and that 30% of the light in CsI is unguided by the micro-columnar structure of the phosphor, one would expect to see superior or equivalent resolution from the lower cost GdOS system. Micro-columnar phosphors are capable of guiding 50-70% of the fluorescence and, compared to the same thickness of particular phosphor, will exhibit a sharper spread point function.

For typical medical imaging applications other than radiotherapy and portal imaging, energies are 30-60 KV. Micro-columnar phosphor combined with CsI has a superior absorption coefficient. For higher energies, such as those of interest for cIEDs and advantage of CsI is lost and the GdOS screens in pairs will have the same total absorption of a CsI screen.

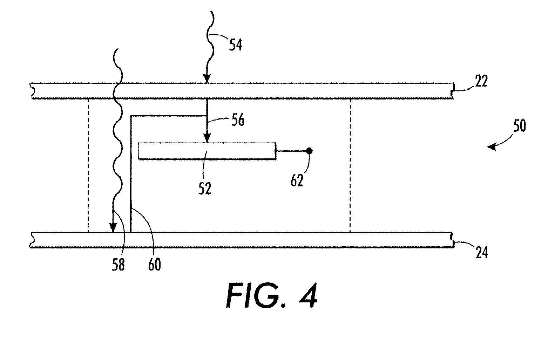

In addition to the 'indirect' detection transducer, where the x-rays cause an intermediate reaction, as in the fluorescence of the phosphor to be detected by the sensor, more direct approaches to sensors may be used. Figure 4 shows one such example. In Figure 4, the sensor elements such as 50 may consist of voltage detectors and the transducer layers consist of photoconductors. Any type of material that converts radiation into voltage would suffice. In one embodiment, the material would be selenium.

When x-rays strike the photoconductor 54, the photoconductor converts the x-ray energy into charge, which may be gathered by the charge electrode 52. The charge electrode 56 produces a charge that is sensed by a charge readout system as a voltage Vout 62. X-rays that pass through the first transducer layer such as 58 would strike the substrate facing photoconductor and also produce a voltage. A via or other path such as 60 would exist to allow the generated voltage or current to pass through the substrate back to the sensing element such as the charge electrode. Through substrate vias (TSVs) are broadly know in the semiconductor and flat-panel industry and all variations are within the scope of the embodiments.

While the implementation of the sensor elements between Figure 3 and 4 are different, there are several things common to the system. In both cases signals transduced from x-rays are passed from two transducers, on top and a second bottom, to the active matrix. With reference to the bottom signal, in Figure 3 that passage is by visible light through transparent substrate 21. With reference to the bottom signal, in Figure 4 that passage is by via 60.

Similarly, it may be advantageous for the first capture layer to consist of a material that allows a portion of incident x-rays to pass through to the second x-ray capture layer. Other common elements to the overall system exist, these are just some examples of how the system may be structured, regardless of the sensing elements selected. Similarly, while a particular structure or approach may have been discussed with regard to one or the other sensing element implementation, any of these structures and approaches may apply to either implementation.

It will be appreciated that several of the above-disclosed and other features and functions, or alternatives thereof, may be desirably combined into many other different systems or applications. Also that various presently unforeseen or unanticipated alternatives, modifications, variations, or improvements therein may be subsequently made by those skilled in the art which are also intended to be encompassed by the following claims.

Furthermore, it is intended that features disclosed in association with one embodiment are generally interchangeable with each other embodiment unless the context would prevent it.

## Claims

1. An x-ray sensor, comprising:
a first x-ray transducer layer on a first side of the substrate;
a second x-ray transducer layer on a second side of the substrate opposite the first side of the substrate; and
a sensor array of pixels between the first x-ray transducer layer and at least a portion of the substrate, the sensor array connected to the first and second x-ray transducer layers.

2. The x-ray sensor of claim 1, wherein the substrate is optically transparent.

3. The sensor of claim 1 or claim 2 in which the substrate thickness is equal to or less than a spacing between the pixels of the sensor array and wherein, optionally, the substrate thickness is 200µm or less.

4. The x-ray sensor of any of the preceding claims, wherein the first and second transducer layers comprise first and second x-ray capture layers.

5. The x-ray sensor of claim 4, wherein the first capture layer is of a material that allows a portion of incident x-rays to pass through to the second x-ray capture layer.

6. The x-ray sensor of claim 4 or claim 5, wherein the first and second capture layers comprise phosphor layers selected to fluoresce upon reception of x-rays and wherein, optionally, the phosphor is gadolinium oxysulfide (GdOS).

7. The x-ray sensor of any of claims 4 to 6, wherein the first and second capture layers are of different thicknesses.

8. The x-ray sensor of any of claims 4 to 7, wherein the first capture layer is thinner than the second capture layer.

9. The x-ray sensor of any of claims 4 to 8, wherein the sensor array of pixels comprises an array of PIN photodetectors.

10. The x-ray sensor of any of the preceding claims, wherein each PIN photodetector has first and second electrodes with the first electrode nearer to a source of x-ray radiation than the second electrode, and the second electrode is at least partially transparent and wherein, optionally, the electrodes are formed from indium-tin-oxide.

11. The sensor of claim 10, wherein the second electrode only partially covers the pixel area.

12. The sensor of any of the preceding claims, wherein the first and second transducer layers comprise photoconductors and wherein, optionally the photoconductors are formed from selenium.

13. The sensor of claim 12, wherein the pixels comprise voltage detectors.

14. The x-ray sensor of any of the preceding claims further comprising vias to allow passage of signals from the second photoconductor to the voltage detectors, wherein, optionally, the vias pass through the substrate.

15. An x-ray imaging system, comprising:
an x-ray sensor according to any of the preceding claims;
an x-ray source; and
a target to undergo x-ray illumination.
